## Europäisches Patentamt
## European Patent Office
## Office européen des brevets

(11) Publication number: **0 071 307**
**B1**

(12) **EUROPEAN PATENT SPECIFICATION**

(45) Date of publication of patent specification: **15.01.86**

(51) Int. Cl.⁴: **D 06 F 37/30, H 02 P 5/40**

(21) Application number: **82200931.2**

(22) Date of filing: **22.07.82**

(54) **Drum speed control system for a washing and/or spin drying machine.**

(30) Priority: **31.07.81 GB 8123479**

(43) Date of publication of application:
**09.02.83 Bulletin 83/06**

(45) Publication of the grant of the patent:
**15.01.86 Bulletin 86/03**

(84) Designated Contracting States:
**DE FR GB IT**

(56) References cited:
EP-A-0 011 503
EP-A-0 018 603
EP-A-0 033 161
FR-A-2 358 777
GB-A-1 266 691
GB-A-1 510 943

ELECTRONICS, vol. 52, no. 20, 27th September
1979, pages 140-144, New York (USA);
T.SLADE: "Microcomputer-based control
smoothes universal motor performance"

(73) Proprietor: PHILIPS ELECTRONIC AND
ASSOCIATED INDUSTRIES LIMITED
Arundel Great Court 8 Arundel Street
London WC2R 3DT (GB)
(84) GB

(73) Proprietor: N.V. Philips' Gloeilampenfabrieken
Groenewoudseweg 1
NL-5621 BA Eindhoven (NL)
(84) DE FR IT

(72) Inventor: Seth, Siya Vallabh
C/O MULLARD LIMITED New Road
Mitcham Surrey CR4 4XY (GB)
Inventor: Keulemans, Alexander Hendrik
Francis
13 Palmer Close
Horley Surrey (GB)

(74) Representative: Boxall, Robin John et al
Philips Electronic and Associated Ind. Ltd.
Patent Department Mullard House Torrington
Place
London WC1E 7HD (GB)

# 0 071 307

## Description

This invention relates to a drum speed control system for a washing and/or spin drying machine of the type having a laundry drum which is rotatable by an electric motor which is driven from an a.c. mains voltage supply and which is provided with a tachogenerator having an a.c. output signal which is proportional to the speed of the motor and, hence, of the drum; the system being arranged for connection to said motor and tachogenerator to form a control loop, which system has an input circuit for the tachogenerator signal and an output motor-drive circuit arranged to control the energy supplied to the motor from the supply, whereby the motor speed may be automatically brought to, and/or maintained substantially constant at, any predetermined target speed.

Such a system is known, for example, from United Kingdom Patent Specification No. 1,266,691, which discloses an analogue speed control system for a d.c. motor in which the motor drive circuit includes a thyristor arranged in series with the motor and which is only fired during the alternate half cycles of the mains voltage supply having an appropriate sign. The operation of the system depends on the use of timing, or ramp, voltages developed across various capacitors and also upon the use of reference voltages. Each of these requires a highly stable power supply in order to maintain the various predetermined motor speeds within acceptable tolerances and the capacitors concerned cannot, in general, be included in a solid state circuit since their values are too high. The use of separate capacitors, which have to be within close-tolerance values and are hence expensive, reduces the reliability of the system and also makes the system relatively bulky. The amplitude of the tachogenerator output signal is used as the speed-determining parameter of the signal and this entails the use of a relatively expensive tachogenerator in order to provide the necessarily linear speed/amplitude characteristic.

It is known in washing machines in general that rapid initial acceleration caused by applying the full mains power to the motor causes the drum to jolt and produce cabinet noise generally known in the art as thumping or bumping. This is most severe on initial switch on and it is known to provide a so-called "soft start" to the motor—that is to say that the power is applied in an increasing manner during the initial starting-up period. It is also known from the above-mentioned Patent Specification No. 1,266,691 to control the acceleration of the motor when going from a "wash" speed (drum speed of about 50 r.p.m.) up to "spin" speed (800 to 1,000 r.p.m.) to provide an initially gradual acceleration so that the drum passes slowly through a so-called distribute speed at which articles in the drum tend to distribute themselves fairly evenly around the drum. Thereafter, the speed increases rapidly to the spin speed. These speed changes are again controlled by analogue ramp voltages which are initiated at a given time in the course of the washing programme controlled by the timer motor of the corresponding washing and spin drying machine.

An article in "Electronics", vol. 52 No. 20 (27th September 1979) pages 140—144 and entitled "Microcomputer-based control smoothes universal motor performance" discloses a digital microprocessor-based closed loop motor controller in which the microprocessor continually compares the motor target speed set by the user with the actual motor speed derived from the output signal of a Hall-effect pickup operating as an a.c. output producing tachogenerator and then adjusts the power delivered to the motor to minimise any error in performance. The power is adjusted by adjusting the firing angle of a triac included in series with the motor. The loop in this known controller is controlled solely in dependence upon the difference between the target speed and the actual motor speed.

Published European Patent Application No. 0 011 503 discloses a washing machine motor speed control system in which, again, the motor target speed is compared with the actual motor speed derived from the output signal of a tachogenerator and the result used to control the firing angle of a series triac and hence the motor speed via a feedback loop. Again the loop is controlled solely in dependence upon the difference between the target speed and the actual motor speed.

Published European Patent Application 0 018 603 discloses an "anti-kickback" digital power tool control system in which the rate of deceleration of an a.c. motor which drives the tool is measured and, if this rate exceeds a threshold value, the motor is disconnected. The deceleration is measured by taking two consecutive speed readings over a measured interval. There is no speed control loop in this system.

An object of the present invention is the provision of a speed control system which has an improved accuracy, which does not rely on the use of ramp voltages derived from capacitors, and which provides a high degree of control on the rate of speed change, particularly when changing from one predetermined speed to another.

According to one aspect of the invention, there is provided a drum speed control system of the type defined in the opening paragraph hereof, characterised in that the system is a digital system and the control loop includes means for controlling said energy in dependence upon a derived function of the rate and sign of any change in the speed of the motor and also in dependence upon a derived function of any difference between the actual motor speed and the required target speed, said rate of change in speed and the actual speed being derived from the tachogenerator output signals.

The use of a digital system instead of the known analogue stores, the system accuracy being largely proportional to the repetition rate of clock pulses used to drive the counters in order, for example, to determine the duration of the period of the tachogenerator output signal frequency and, hence, the motor speed.

2

In a further embodiment of a system according to the invention, the said means varies the firing angle C of the thyristor in a half cycle of the mains supply waveform in accordance with the control loop expression

$$C=C'+F1(PM'-PM)+F2(PT-PM)$$

where:

C' is the immediately previous firing angle,

PM is a function of the period of the latest cycle of the tachogenerator output signal,

PM' is a corresponding function of the period of a preceding cycle of the said output signal,

PT is a corresponding function of the period of the tachogenerator output signal which corresponds to the predetermined speed, and

F1 and F2 are scaling factors which at least partly determine the rate of change of motor speed, the values of (PM'-PM) and (PT-PM) being each truncated to a respective given value if they exceed said values.

The term (PM'-PM) represents any acceleration of the motor as measured between, for example, consecutive periods of the tachogenerator frequency and PT is a function of the required tachogenerator frequency and, hence, of the target speed. The value of PM may easily be determined by counting the number of clock pulses arriving from a clock (having a frequency which is considerably higher than the highest possible tachogenerator frequency) in one period of the tachogenerator frequency. The value of (PM'-PM) can be determined equally easily by a counter which counts down by PM' from an initial count of PM. The value of (PT-PM) can be obtained in a similar manner. In addition to enabling the system to be readily implemented in a simple manner such as that just described, the use of the tachogenerator system leads to several advantages. Firstly, all the quantities concerned in the control loop can easily be represented as numbers in binary form and these can be readily stored and acted upon mathematically. Secondly, since time measurements can be made and, if required, stepped ramps can be easily and accurately generated by means of counters driven from a clock supply, the system can readily be implemented as an integrated circuit since it is no longer necessary to use capacitors. Thirdly, digital logic circuits can more readily be implemented by unipolar transistors which also have a higher packing density on an integrated circuit chip.

The invention is further based on the realisation that a greater measure of control is obtained if the control is a function of both the acceleration of the motor and of the speed increase that is necessary to reach the target speed. This is because the control loop has to satisfy two requirements, namely to effect a change of speed from one predetermined value to another and to maintain the speed constant when it has reached the required value. We have found that a function of the required speed increase is the more important of the two factors when changing from one speed to another and that a function of the rate of speed change (i.e. the acceleration) is the more important when maintaining a constant speed. We have further realised that these two functions can be combined to produce very smooth operation of the motor when changing speed.

In an embodiment of a system according to the invention, the motor drive circuit includes a semiconductor controlled switch arranged to be connected in series with the motor, and wherein the said means controls the energy supplied to the motor by varying the phase angle of the mains supply voltage at which the switch is fired into its conductive state by a firing pulse generated in dependence upon the said functions. This has the advantage that the control of the firing angle of the switch can be achieved to any required degree of accuracy in a very simple manner by using digital techniques, for example digital counters and frequency instead of its amplitude allows a very cheap tachogenerator to be used, since its frequency inevitably bears a fixed ratio (depending upon the number of its pole pairs) to the motor speed. Also, very small changes in frequency are much more easily and accurately measured than small changes in amplitude of the tachogenerator signal.

It is to be noted that United Kingdom Patent Specification No. 1,510,943 discloses a speed control system which uses the frequency of the tachogenerator output signal in preference to its amplitude. The system disclosed, however, suffers from the aforesaid disadvantages of using an analogue system and ramp voltages stored on capacitors.

Preferably the system is implemented in integrated circuit form using MOS unipolar transistors.

Preferably the switch is fired in every half cycle of the a.c. supply voltage. This not only has the advantage that the load on the mains supply is balanced—that is to say that current is taken in every half cycle instead of in only the alternate half cycles of appropriate sign—but also the control loop is sampling and controlling the motor speed at twice the rate and so exercises a closer loop control.

According to a further aspect of the present invention, there is provided a method of controlling the speed of the drum of a washing and/or spin drying machine of the type in which the drum is rotatable by an electric motor which is driven from an a.c. mains supply and which is provided with a tachogenerator having an a.c. output signal which is directly proportional to the speed of the motor and, hence, of the drum, characterised in that the method comprises the steps of

(a) deriving from the tachogenerator output signal a first quantity (acceleration term) which is a function of the current rate of change of speed of the motor,

(b) deriving from the tachogenerator output signal a second quantity (error term) which is a function of the difference between the current motor speed and the required motor speed,

(c) combining the first and second quantities, having regard to their sign, to produce a third quantity, and

(d) controlling the driving power to the motor in dependence upon the magnitude of the third quantity; whereby the speed of the motor may be changed to a predetermined target speed at a controlled rate and then maintained at the target speed.

In the same manner as described above for the control system, this method has the advantage that the control loop adjusts/maintains the motor speed in dependence upon both an "acceleration" term and an "error" term which is a function of the difference between the actual speed and the required speed of the motor.

The said acceleration term may be obtained by measuring the duration of at least a major part of each of two consecutive periods of the tachogenerator output signal frequency and deriving a function of the difference between them. This provides a very simple method of obtaining a measure of the acceleration at any instant since the periods can be determined by an up-counter and their difference determined by a down-counter preset to the last count value achieved by the up-counts.

The acceleration term may be derived as a function of said difference by truncating said difference to a selected one of a set of predetermined values if the difference is greater than the selected value, and then multiplying the said predetermined value by a selected factor, both selections being made in dependence upon the particular acceleration effect required. The effect of this is that the accelerations are divided into a number of ranges each of which is represented by a relatively low value, for example 1, 2, 3, or 4, and these low values are multiplied by a factor (for example 2, 4, 8, or 16) which depends upon the required changes in acceleration over the period taken by the motor to change its speed to the required predetermined speed.

Each error term may be obtained in a similar fashion to the acceleration term, except that in this case the said difference is the difference between the measured period of the tachogenerator output signal frequency and the period that corresponds to the required predetermined motor speed.

An embodiment of the invention will now be described, by way of example, with reference to the accompanying drawings, of which:—

Figure 1 shows a block schematic circuit diagram of a loop control system,

Figure 2 shows a block schematic circuit diagram of an arrangement controlling a distribute speed and for testing for out of balance of the articles (e.g. clothes) prior to proceeding to the spin speed,

Figure 3 shows a block schematic circuit diagram of a tachogenerator signal processor, and

Figure 4 shows various waveforms in the circuit of Figure 3.

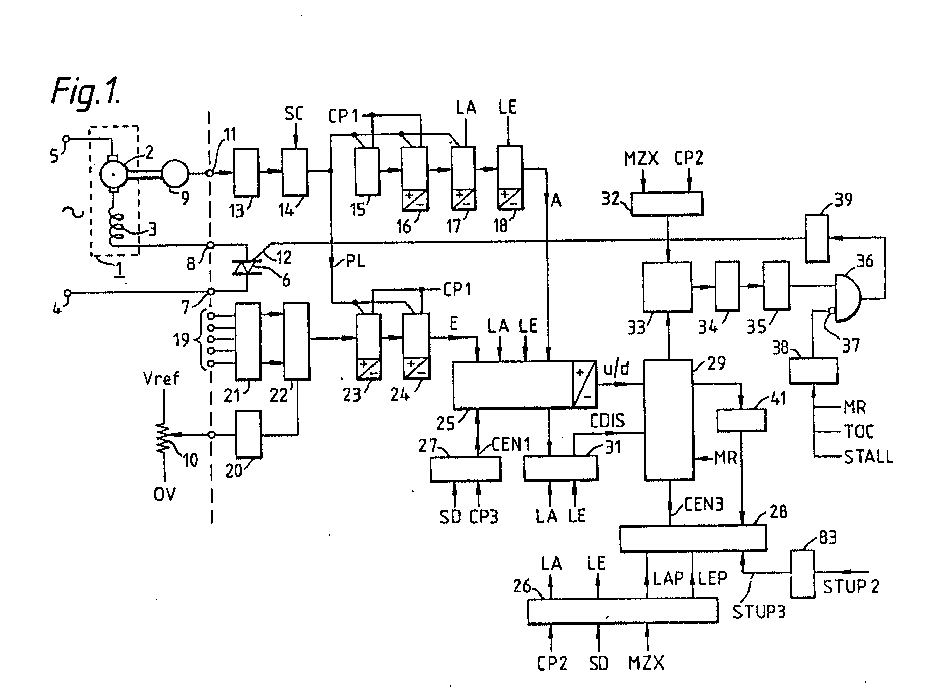

Referring now to Figure 1·of the drawings, a motor 1 to be controlled by the control system is arranged, in a manner not shown, to rotate the drum of a washing and/or spin drying machine and comprises a rotor 2 and a series stator winding 3. In operation, an a.c. mains voltage supply is connected to terminals 4 and 5 and the energy supplied to the motor from the mains supply is controlled by a semiconductor controlled switch 6 connected in series with the motor via output terminals 7 and 8 of the control system. A tachogenerator 9 is coupled to the motor 2 so as to rotate therewith and to provide an a.c. output signal at terminal 11 whose frequency is directly proportional to the rotational speed of motor 1. Terminal 11 is the control system input terminal.

Motor 1 may be a d.c. motor, in which case switch 6 could be a unidirectional thyristor triode which is fired via its control electrode 12 only in those alternate half cycles of the mains voltage supply having a polarity corresponding to that required by the motor. Preferably, however, the switch 6 is a bidirectional thyristor (triac) as shown which is fired by a firing pulse on control electrode 12 once in every half cycle of the a.c. mains voltage supply. In this case a d.c. motor may be used by rectifying the power supplied via switch 6 by a rectifier bridge circuit. Preferably, however, the motor is an a.c. motor.

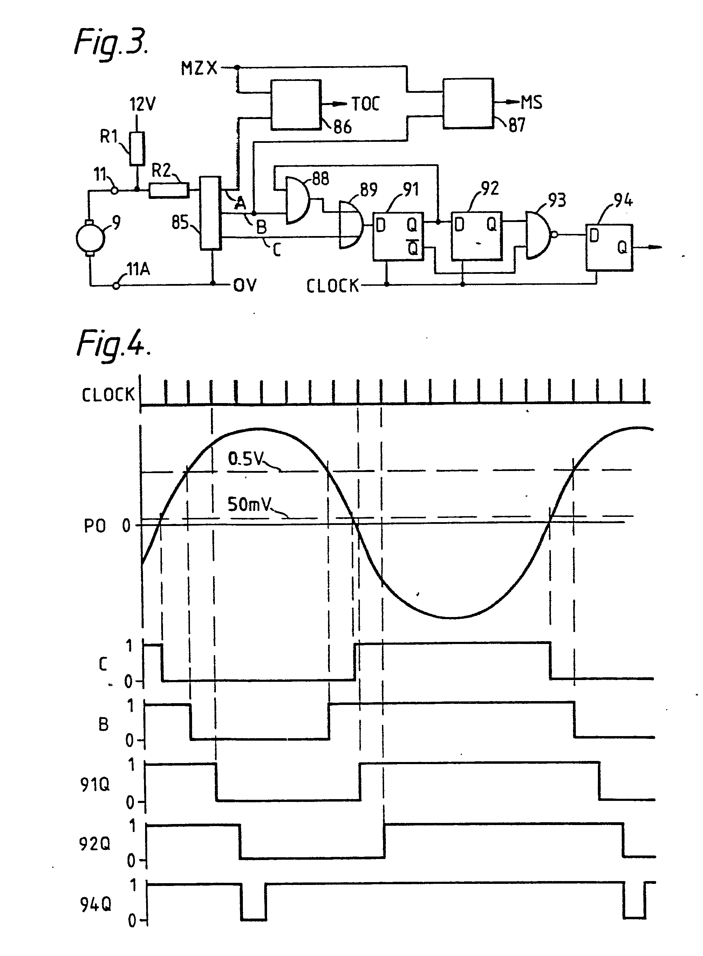

Terminal 11 is connected to the input of a signal processor 13 of the type which generates a single short-duration output pulse in every cycle of the output signal of tachogenerator 9. Such a processor is described below with reference to Figure 3 of the drawings. The output signal from processor 13 thus comprises a series of short pulses which have a repetition rate equal to the frequency of the tachogenerator signal. These pulses are fed to a divider 14 which is controlled via a speed control input SC to divide the pulses by a factor (e.g. 1, 8, or 16) which depends upon the required target speed, as will be explained hereinafter. The output pulses PL from divider 14 are fed to an up-counter 15 together with clock pulses CP1 which have a repetition rate (e.g. 2.5 kHz) considerably higher than the highest tachogenerator frequency.

The control system is a digital system using synchronous logic. Counter 15 is therefore of the type which outputs and clears its contents on receipt of a PL pulse and then starts counting the incoming clock pulses CP1 at the end of that pulse. If we assume that the division ratio of divider 14 is set at unity then, in general, the maximum count PM' reached by counter 15 in each cycle of the tachogenerator signal is directly proportional to the period of that signal and, hence, is inversely proportional to the speed of the motor and drum during that cycle. We have found, however, that there is no reason to retain this proportionality when the motor is going very slowly, for example during a starting up period, since it is self-evident that if the value of PM' is greater than a given very high value then a considerable increase of speed is needed and so a relatively coarse control can be used at this stage. This has the advantage that the capacity of the counter can be determined purely on the basis of the degree of "fineness" of control that is required. We have found that a seven-bit digital counter (i.e. a maximum count value of 127) gives an adequately fine control in practice.

At the next PL pulse, the contents of counter 15 are fed in parallel into a down-counter 16 and then cleared from counter 15. Thus during the next cycle of the tachogenerator output frequency, counter 15 counts up to a new value PM (which may or may not be equal to the value PM') and counter 16 simultaneously down-counts by PM to a value A=(PM'−PM) which may be positive, negative, or zero according to whether the motor has respectively increased, decreased, or not changed its speed since the previous cycle represented by PM'. Thus the value of A is a function of the acceleration of the motor. At the end of the second cycle, that is to say on arrival of the third PL pulse, the value A=(PM'−PM) and its sign is latched into a first store 17. Thus a respective acceleration function A is produced in the first store 17 for every cycle of the tachogenerator output signal frequency. This acceleration term A and an error term E (to be described) are used at the beginning of each half cycle of the mains voltage supply to compute the required firing angle during that half cycle. To ensure that the latest values for A and E are used, a pulse LE is generated a short period after each mains voltage supply zero crossing and this pulse latches the currently-available acceleration term A into a second store 18.

Modern washing machines cater for several different drum speeds. For example these may be selected from three different wash or rinse speeds, a clothes distribution speed, and up to four spin speeds with perhaps an additional "variable spin" speed range. Also, of course, there is the zero speed for the stop signal. The selection of the required speed (target speed) may be made manually or by an automatic program control unit and it is assumed that these target speeds are received as a parallel five-bit code on target speed signal input terminals 19. These speed signals are decoded into the specific speed functions required in a 5-bit ROM (read-only memory) 21 and each of the speeds is coded in a second ROM 22 into a 7-bit target period PT which is the period of the tachogenerator output frequency when the motor is running at the target speed. The value of PT is represented by the number of clock pulses that would occur during the period concerned using the same clock frequency as that used to measure the value PM, having regard to the appropriate division ratio of divider 14. Typical division ratios and values of PT for various drum speeds will now be described for a particular embodiment of a washing machine in which the tachogenerator had four pole pairs, its output frequency thus being four times the rotational speed of the motor. The motor was coupled to the drum in such a manner that one revolution of the drum required 12.5 revolutions of the motor. Table I shows typical drum speeds, in revolutions per minute (rpm), over the range used in practice. Not all these speeds are necessarily used in any one washing machine, of course. Table I also shows the corresponding motor speeds, tachogenerator frequencies, the chosen divide ratio for divider 14, and the values of the target periods PT determined on the basis of a 2.5 kHz clock pulse rate, i.e. each PT unit represents 0.4 mS.

TABLE I

|  | Drum speed (rpm) | Motor speed (rpm) | Tacho F. (Hz) | Divide ratio | PT (units) |
|---|---|---|---|---|---|
| Wash 1 | 25 | 312 | 21 | 1 | 120 |
| Wash 2 | 35 | 437.5 | 29 | 1 | 86 |
| Wash 3 | 52 | 650 | 43 | 1 | 58 |
| Distribute | 82 | 1025 | 68 | 1 | 37 |
| Spin Var. | 400 | 5000 | 333 | 16 | 120 |
| Spin 1 | 500 | 6250 | 417 | 16 | 96 |
| Spin 2 | 700 | 8750 | 583 | 16 | 69 |
| Spin 3 | 900 | 11250 | 750 | 16 | 55 |
| Spin 4 | 1100 | 13750 | 917 | 16 | 44 |

In addition to Wash speeds 1 to 3, Distribute speed, and Spin speeds 1 to 4, Table I also shows the minimum speed (Spin Var.) of a variable speed range which may, in some washing machines, be adjusted manually. The tachogenerator frequency is shown in two ranges, namely 21 to 68 Hz and 333 to 917 Hz. The frequencies in these two ranges are divided by unity and 16 respectively, and hence provide a maximum period PT of 120 units for each case. In some cases, intermediate drum speed indications may be used, in

5

# 0 071 307

which case divider 14 would be set to divide by eight so that the longest period PT is again 120 units. The reason for such division is two-fold. Firstly, the overall drum speed range can be of the order of fifty to one (44:1 in the example given in Table I) and it would be difficult to maintain a comparably close speed control over the whole of this wide range. Secondly, the maximum value of 120 for PT can be represented as a 7-bit binary number and, hence, limits to a reasonable level the required capacities of the counters and stores used.

It is also to be noted from Table I that the fastest speed required is represented by a PT value of 37, that is to say that the overall speed range of 44:1 has been reduced to 120:37—i.e. to less than $3\frac{1}{4}$:1.

Each PL pulse sets the appropriate selected value of PT in a down-counter 23 which, under the control of 2.5 kHz clock pulses CP1, then down-counts from PT by the value PM between that PL pulse and the next PL pulse to produce an error term E=PT−PM. The next PL pulse latches the value (PT−PM) with its appropriate sign into a store 24 which stores the error term E. Thus the magnitude of this term depends upon the change in speed required to achieve the target speed and its sign denotes whether a speed increase (−) or decrease (+) is required.

As explained above, an LE (load error) pulse is generated a short period (e.g. 100 µS) after each mains crossing. This pulse is used as the signal to start computing and combining functions derived from the acceleration and error terms A and E respectively to produce an expression F1(PM′−PM)+F2(PT−PM).

This LE pulse, having a duration of 12.5 µS for example, causes the error term E, together with its sign, to be passed in parallel into an up/down error counter 25. Simultaneously, as described above, the application of the same LE pulse to store 18 latches the corresponding value of the acceleration term A into store 18.

In order to derive the function F2(PT−PM), the value of (PT−PM) is truncated to a relatively low predetermined value if (PT−PM) exceeds this value. In some cases, the predetermined value may be selected in dependence upon the selected target speed. The reason for such truncation is that experiments have shown that only a low value error function is needed to give a very smooth and accurate speed control. In a practical embodiment of the system being described, it was found that all the varying requirements for drum speeds and acceleration rates could be met if the value of F2(PT−PM) never exceeded a few units. Thus, for example, if (PT−PM) has the value 0, 1, or 2, then this value is passed to error counter 25. If the value exceeds 2, however, it is truncated to 2. The truncation level that is selected depends upon several factors which will vary from machine to machine and from manufacturer to manufacturer. The selected level depends, for example, upon the motor characteristics and power, on the speed range, on the load variation to be covered, on the tachogenerator output frequency relative to the motor speed, on the clock rate used to measure the period PM, on the rate at which the firing angle of the switch is controlled (e.g. once per cycle or per half cycle), and on the size of the steps which control the firing angle. In the practical embodiment, the firing angle was controlled in every half cycle of the mains voltage supply, the control phase angle step size was 0.45° (i.e. 400 steps per 180°), and the required drum speed range extended from Wash 2 (35 rpm) to Spin 4 (1100 rpm). With some motors and speed ranges, it has been necessary to use a different truncation level for (PT−PM) and in some embodiments three different truncation levels were used in dependence upon which of three predetermined speed ranges included the particular target speed required. In one case, optimum control conditions were achieved in a more complex manner by truncating (PT−PM) to 4 and then halving to the nearest upper unit if (PT−PM) were equal to 2, 3, or 4. Thus the values in this case were:—

| (PT−PM) | 0 | 1 | 2 | 3 | 4 |
|---|---|---|---|---|---|
| F2(PT−PM) | 0 | 1 | 1 | 2 | 2 |

The way in which the less complex truncation is achieved in this embodiment will now be described, whereafter it will be evident to those skilled in the art that more complex truncations can be achieved by, for example, altering relative clock rates.

The sequencing and timing of the various control operations is controlled by an error load control unit 26 provided with parallel target speed decode information from ROM 21 at a group of speed decode inputs SD, with a 40 kHz clock pulse input CP2, and with mains supply zero crossing instants at an input MZX. The MZX input signal comprises a 12.5 µS pulse which is provided each time the mains supply voltage passes through zero, i.e. at the beginning of every half cycle of the supply frequency. Means for deriving such zero crossing pulses are very well known in the art and need no further description herein.

Unit 26 has four pulse outputs respectively referred to as LE, LEP, LA and LAP, the first of which (LE) has already been referred to and follows shortly after each mains zero crossing pulse received on input MZX. This LE pulse is followed by an LEP (load error period) pulse the length of which determines the truncation level for (PT−PM). This is followed by a short LA (load acceleration) pulse which, in turn, is followed by an LAP (load acceleration period) pulse having a length which is determined by the target speed setting received at speed decode input SD. Thus unit 26 is a simple sequencing circuit.

The count rate of error counter 25 is controlled by 80 kHz clock pulses CP3 via a count enable lead CEN1 from a variable divider 27 the division ratio (1, 4, 8, or 16) of which is controlled in dependence upon the required target speed via a speed decode input SD.

6

Outputs LEP and LAP of unit 26 are fed to control inputs of a firing angle control decoder 28 having a CEN3 (count enable) output connected to an input of a firing angle up/down counter 29. Error counter 25 is provided with an all-zeros detector 31 which gives a "count discontinue" signal on lead CDIS to counter 29 each time counter 25 counts up or down to the all-zeros state. Error counter 25 counts up or down (depending upon the sign from counter 24) by the value (PT−PM), at the 80 kHz rate of clock pulses CP3 if the division ratio of divider 27 is equal to unity, until it reaches the all-zeros state. Simultaneously, counter 29 is enabled by an enabling pulse on lead CEN3 derived from the load error pulse LEP input to decoder 28. Counter 29 counts at the CP3 clock pulse rate (80 kHz), the direction of count being controlled by the up/down (+/− sign) signal from counter 25 on lead u/d.

The abovementioned truncation of the value of (PT−PM) to 2 or less will now be described. If (PT−PM) is zero, then the all-zeros detector 31 responds to the zero state of counter 25 as soon as an input LE clearing pulse disappears. The resulting signal on lead CDIS inhibits counter 29 which, therefore, does not change its existing count state (hereinafter referred to as C'). In a similar fashion, if (PT−PM) is equal to 1 or 2, then the stored value C' in counter 29 is correspondingly incremented or decremented by 1 or 2 respectively before the detector 31 inhibits the count. The length of the enabling pulse on CEN3 is determined by the length of the load error period pulse LEP and this is set at such a length in the present example that only two pulses at the CP3 rate can be fed to, and counted by, counter 29 in this period. Thus if the value of (PT−PM) is greater than two, no more than two pulses can be counted by counter 29 even though error counter 25 may still continue counting to zero.

As explained above, the length of the LEP pulse may have different values to meet different circumstances and may, if required, be made dependent upon the required target speed setting indicated on the SD inputs to the control unit 26.

The LEP pulse is followed by an LA pulse from control unit 26 and, *inter alia*, this pulse clears the detector 31, clears the contents of store 17 (to ensure that the value of (PM'−PM) therein which is stored in store 18 by the preceding LEP pulse cannot be used again), and loads the value of (PM'−PM) and its sign stored in store 18 into the error counter 25.

In a particular practical embodiment of a washing machine including a control system according to the invention, the system was so arranged that the value of (PM'−PM) was truncated to 4 if it exceeded 4 and was then multiplied by a factor of 4, 8, or 16 selected in accordance with the particular target speed concerned. Table II shows the drum speeds concerned divided into three speed groups and the selected values for the function F1(PM'−PM).

TABLE II

| Speed group | Target speed | (PM'−PM) (+ or −) | (PM'−PM) truncated to | Multiplying factor | F1(PM'−PM) |
|---|---|---|---|---|---|
| I | Wash 2<br><br>Wash 3 | 0<br>1<br>2<br>3<br>4 | 0<br>1<br>2<br>3<br>4 | 4 | 0<br>4<br>8<br>12<br>16 |
| II | Distribute Spin 1 | 0<br>1<br>2<br>3<br>4 | 0<br>1<br>2<br>3<br>4 | 8 | 0<br>8<br>16<br>24<br>32 |
| III | Spin 4 | 0<br>1<br>2<br>3<br>4 | 0<br>1<br>2<br>3<br>4 | 16 | 0<br>16<br>32<br>48<br>64 |

It can be seen from Table II that the value of the function F1(PM'−PM) varies from a relatively low number in the case where both the current acceleration and the target speed are relatively low, to a relatively high number for the highest target speed where the current acceleration is relatively large. Thus the degree of control is proportional to the target speed as well as to the current acceleration. Thus if we take an example where the motor is running precisely at the required target speed in any speed group, the value of F1(PM'−PM) is zero. If the speed then changes very slightly, then (PM'−PM) will become 1 and a speed correction factor of 4, 8, or 16 will be applied in the control loop, depending upon the speed group concerned, such that the higher the target speed and acceleration, the greater the correction factor that needs to be applied in order to provide a corresponding correction rate over the range.

# 0 071 307

The way in which the function F1(PM'−PM) as defined by Table II is derived in the embodiment shown in Figure 1 will now be described.

After the termination of "load acceleration" pulse LA, the error load control unit generates an LAP (load acceleration period) pulse having a period which is partly determined by the truncation level (4 in this case) and also by the speed group (Table II) and, hence, the multiplying factor. To deal with the multiplying factor first, this is achieved by the variable divider 27 which reduces the count rate of error counter 25 by 4, 8, or 16 in dependence upon the speed group concerned as defined by the speed decode input SD in accordance with Table II. Thus error counter 25 counts at 20 kHz, 10 kHz, and 5 kHz in response to the selection of a target speed in speed groups I, II, and III respectively of Table II. The period of pulse LAP is the product of the multiplication factor, the truncation level (4), and the period of one cycle of the 80 kHz clock pulse CP.

Thus if we first take an example where the value of (PM'−PM) is equal to or greater than 4 and the required target speed is in group 2 (multiplication factor 8), then pulse CEN3 is only of sufficient length to enable counter 29 to count 32 pulses of the 80 kHz input CP3 clock pulses. During this period, counter 25 is counting up or down at the rate of 10 kHz and, since the value of (PM'−PM) is greater than 4, it will not have reached its zero count and, hence, detector 31 will not have operated. The value of F1(PM'−PM) is thus 32 and firing angle counter 29 will have counted up or down by this number.

If now we take an example where the value of F1(PM'−PM) is 3 and the required speed group is III, then divider 27 is set to divide the CP3 clock rate by 16 so that error counter 25 counts up or down by 3 at the rate of 5 kHz. Since counter 29 is simultaneously counting at the 80 kHz rate, it will have counted 48 in the appropriate direction during the same period, at the end of which the error counter 25 has reached the all-zeros state and detector 31 immediately inhibits counter 29 so that it cannot further change its count value.

It has been assumed that the count value in firing angle counter 29 before computing and combining the acceleration and error term is C'. Thus the new count value C in firing angle counter 29 is now

$$C=C'+F1(PM'-PM)+F2(PT-PM),$$

this being the equation of the control loop. The values of C and C' are directly proportional to the respective firing angles of the switch 6 and the equation holds equally true if C and C' are the actual firing angles but the functions F1 and F2 would be different from those described above.

From the above values for the clock pulse frequencies, and the maximum values for PT and PM (limited to at most 127 by the use of a 7-bit counter 15), it will be appreciated that the value for C is calculated in the first millisecond of each half cycle of the a.c. mains voltage supply. The value of each unit of PM and PT is, for example, equal to 1/400 of a half cycle of the mains voltage supply, that is to say a firing angle step of 180/400=0.45°. To relate the value C to an actual firing point in the half cycle for the switch 6, the mains zero crossing signals MZX are applied as reset and start pulses to an up-counter 32 which counts at the 40 kHz rate due to clock pulses CP2. If the mains supply frequency is 50 Hz, then counter 32 counts up from 0 to 400 in each half cycle. The count value of counter 32 is fed in parallel on a continuous basis to one input of a digital comparator 33 and the value of C in counter 29 is fed to the other input of comparator 33. When the count value in counter 32 reaches the value C, comparator 33 provides a short output pulse signal which is latched by a latch circuit 34 which operates a 100 µS pulse generator 35. The 100 µS pulse is fed to a fail alarm gate 36 which enables onward transmission of the firing pulse only if no fault signal is present on its input 37 from a fail signal generator 38 which detects various failure conditions during operation of the apparatus. The signal from gate 36 is then fed via a suitable buffer circuit 39 to the firing electrode 12 of switch 6. Thus the higher the value of C, the latter in each half cycle of the mains voltage supply is the switch 6 fired and, hence, the less energy is supplied to motor 1.

The values of the acceleration and error terms in the above-described control loop are relatively small. There are several reasons for this. Firstly the loop is controlled in every half cycle of the mains supply, e.g. at least one hundred times a second, whereas it is desirable that several seconds are taken to change from one speed to another in order in order to avoid jerking of the drum. Thus the number of progressive control changes is large and, therefore, each can be relatively small. Secondly, the smaller the change in C between successive cycles, the smoother the transition from one speed to another. Thirdly, the lower the numbers concerned, the less time is occupied for the necessary computations at the beginning of each half cycle. In this connection it is to be noted that the 1 mS maximum period taken for the computation is a "dead" period as far as the firing angle control is concerned. This is because the motor current lags the applied voltage by about this amount in a typical case and, therefore, there is no point in firing the switch before the current can rise in the circuit. Also, of course, there would be no point in firing the switch until the voltage across it has risen to a value sufficient to maintain it in the conducting state when the firing pulse is finished. Further, the firing pulse should not be too early in the cycle because the switch is not fully switched off until a short time following a mains zero crossing and it is not desirable to fire the switch before it comes out of conduction because the effect of the control loop would be lost in the early stages.

A "dead" period of 1 mS is sufficient for these purposes and, since this period occupies 40 count steps of counter 32, the minimum usable count value of counter 29 is 40. Similarly, at the end of each half cycle of the mains supply frequency, the slope of the sinewave is so steep that substantially no power would be fed

8

to motor 1 if thyristor 12 were fired right at the extreme end of the half cycle. Thus the maximum permissible value for counter 29 may be set at, for example, 390.

In order to ensure that counter 25 stays within these limits (40 to 390), an end stop decoder 41, which may for example be an autocorrelator, correlates the count value in the counter with the fixed end stop values of 40 and 390 stored in a read only memory forming part of decoder 41 and gives an output signal if either count value is detected. This output signal is used to inhibit the operation of decoder 28 which, in turn, cuts off the count enable pulse CEN3 and hence prevents counter 29 from counting beyond the 40 and 390 limiting count values.

If the control system is operating to maintain the motor speed constant and, for example, the speed decreases slightly for any reason, then the value of PM increases and the acceleration and error terms both decrease. Thus the firing angle is reduced and therefore more energy is applied to the motor to restore its speed. The values of the terms given in Tables I and II were chosen *inter alia* to give a very smooth speed control when maintaining the speed constant at any given target speed. As explained above, the actual values depend on several factors which include the motor characteristics. If the values are too large, then the motor tends to hunt to each side of the target speed in what is generally referred to in the art as a "lively" manner. If the values are too small then the control loop becomes too slow in action. Also, the relationship between the values of the two functions is important, the acceleration function having a larger range of values.

If a command is received to change the speed from, for example, Distribute speed (PT=37) to Spin 1 speed (PT=96), then the Spin 1 PT value (96 from Table I) is loaded into ROM 22 but this value cannot be loaded into counter 23 until the next PL pulse is derived from the tachogenerator 9. Simultaneously, the division factor of divider 14 is altered from unity to 16 (Table I). Thus the next PL pulse will be delayed by 16 periods of the tachogenerator 9; i.e. the effective tachogenerator period count would then be 37×16=592 and this results in seven-bit down-counter 23 counting downwards to its maximum negative value. Hence the value of (PT−PM) in store 24 also has the maximum negative value. The error term will have its maximum negative value for quite a few cycles whilst the drum speed is increasing—in fact until the value of PM is 93. Meanwhile, the first acceleration term would also have had its maximum negative value since down-counter counted from +37 to its maximum negative value of −127 in response to the 592 input pulses from CP1. This only happens the once during a speed change, however, and is of no significance. In the next PL counting period, the up and down counts of counters 15 and 16 respectively reach their maximum and, hence, PM′=PM and (PM′−PM)=0. This continues until the value of PM comes within range of the counters, i.e. 127.

Up to this point, therefore, only the error term (=4) causes the speed increase and this gives a smooth but rapid speed increase. When the value of PM falls to 127 or below, the acceleration term comes into effect and assumes normal control. In this case, it will tend to oppose, but not overwhelm, the error term and will therefore slow up the acceleration in a controlled manner. This slowing up effect gives a smooth acceleration curve up to the required level because the acceleration is smoothly reduced to zero at the required drum speed.

It can readily be appreciated that a similarly smooth control will be provided by the system when changing the drum speed from any speed to other target speeds and that this smoothness is achieved by controlling the energy supplied to the motor in dependence upon a function of the target speed and also on a function of the acceleration.

Instead of having predetermined fixed spin (or other) speeds, a variable speed control may additionally or alternatively be provided by a manually adjustable potentiometer 10 which can be adjusted to provide any voltage between zero and a reference voltage Vref to the input of an analogue-to-digital converter 20. The digital output of converter 20 is fed to the input of ROM 22 to control the PT value of the output of ROM 22 in the same manner as ROM 21.

The foregoing description describes the basic operation of the control loop when going from one speed to another. In practice, however, before starting to increase speed from any speed (including zero) to a spin speed, it is first desirable to go through the distribute speed cycle as explained above. If the clothes are unevenly distributed when the drum speed is being increased to a spin speed, any out of balance of the drum caused by the uneven distribution can cause excessive vibration of the drum and result in serious damage to the washing machine. For this reason, if the distribute cycle is not selected manually, it is automatically generated when the drum speed is required to be increased to a spin speed.

In the distribute (D) cycle, the drum speed is steadily increased from a wash speed to a sufficient speed for the centrifugal force to balance gravity and hold the clothes against the drum. This distribute speed is typically in the range 75 to 85 r.p.m. for domestic washing machines and in the embodiment given in Table I the target period PT for a Distribution speed of 82 r.p.m. is 37.

When going from a wash speed, e.g. with a target period PT=58, to the distribute speed (e.g. PT=37), the target period is decremented one step at a time at regular intervals. The time intervals are fixed in dependence upon the required total period for the change from one speed to the other and upon the difference between the Wash and Distribute PT values—i.e. 58−37=21. This slow change of speed with respect to time is referred to in the art as the distribute ramp.

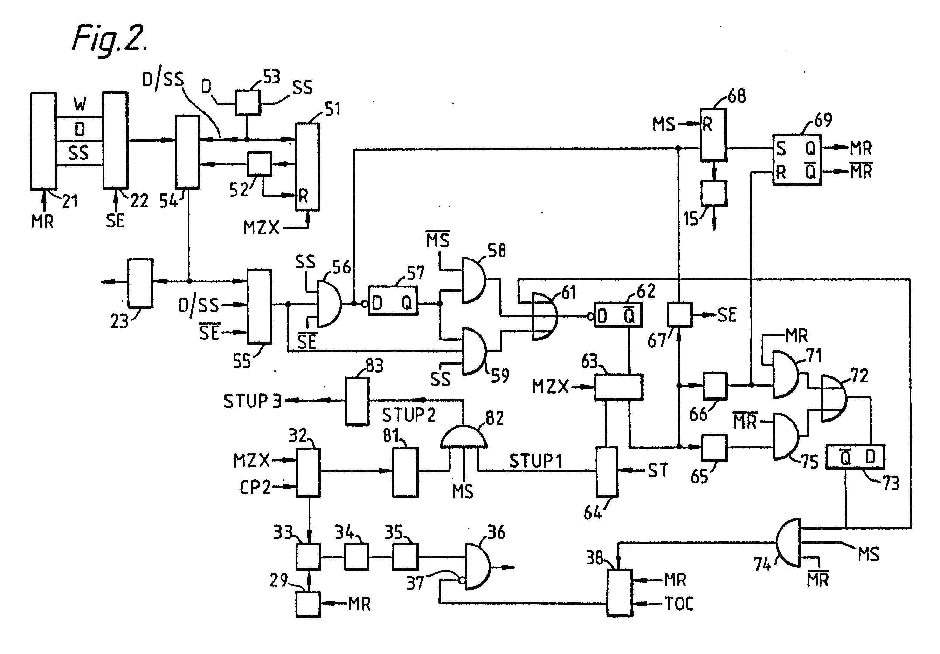

The way in which the distribute ramp is provided will now be described with reference to Figure 2, in which items common to Figures 1 and 2 are given the same reference numerals.

9

The unit decrements are each controlled with respect to time by an 8-bit counter 51 which counts mains frequency zero crossings MZX up to its maximum capacity which, at a mains frequency of 50 Hz, amounts to a full count period of 2.55 seconds. This period is the maximum possible duration of the ramp and is longer than would normally be required for each unit decrement of the target speed. The actual period of each unit step is therefore determined by an 8-bit step decoder 52 which holds an 8-bit code corresponding to the count value in counter 51 that provides the required step time. Counter 51 starts counting on receipt of a D or SS command from a control gate 53. Each time it reaches the count value in decoder 52 the latter provides an output pulse and resets the counter 51. Alternatively counter 51 could be a ring counter which cyclically counts to the required value and then starts again.

Each decrementing pulse is used to decrement a down-counter 54 inserted in series between the second ROM 22 and the (PT−PM) down counter 23. This additional down counter is not shown in Figure 1 since it is only used as a counter when a distribute ramp is required. In all other cases its counting action is inhibited by the control gate 53 since no D or SS signal is present. Thus in all other cases it passes the input number from ROM 22 direct to down-counter 23. Thus during a distribute cycle, counter 54 counts down in unit steps of controlled duration from the Wash speed target period (58) to the distribute speed target period (37). These changes cause a corresponding change in the firing angle in the manner described earlier above.

When the counter 54 reaches the required distribute target speed (PT=37), this value is correlated with the same value (37) in a correlator 55 which gives a "ramp completed" output signal. Correlator 55 is also enabled by the D/SS signal from control gate 53. For the purposes of the following explanation, only the wash (W), distribute (D), and spin (SS) speeds are relevant and only these are shown as the command signals from ROM 21 to ROM 22.

The output signal of correlator 55 would normally be used to switch the washing machine to the spin cycle. However it is used here to start an out of balance (hereinafter referred to as OOB) test which carries out a test cycle capable of detecting any material OOB before allowing the spin cycle to be started. If an OOB condition is detected within a given period (for example two seconds), then the machine is stopped (in order to allow the clothes to fall to the lower part of the drum) and then a further distribute cycle is given followed by a further OOB test cycle. This OOB test not only has the advantage that it protects the washing machine from damage by OOB loads but also has the advantage that it may permit simplification of the drum suspensions since less onerous conditions are imposed thereon.

In order to initiate the OOB test, the "end of ramp" signal from correlator 55 enables an AND-gate 56, the SS signal being present but a "spin enable" signal SE is not present (and $\overline{SE}=1$) since the spin cycle cannot yet be commenced. The output of gate 56 is fed to an inverting D input of a delay flip-flop 57 clocked at the 40 kHz rate—the clock inputs of the various delay flip-flops not being shown in the Figure. The Q output of flip-flop 57 goes to a "O" at the next clock pulse and this "O" signal inhibits two AND-gates 58 and 59 with the result that the output of a combining OR-gate 61 is also "O". This "O" signal at an inverting D input of a further delay flip-flop 62 causes the $\overline{Q}$ output thereof to go to "O" and hence remove the previously existing "1" at the reset input of a mains zero crossing counter 63 fed with mains zero crossing pulses MZX. Counter 63 is therefore enabled and starts to count up. The count state of counter 63 is monitored by four correlators 64, 65, 66, and 67 each of which gives a change in its output signal when the count state in the counter reaches the respective values preset in the correlators. The function of these correlators will be described later below.

If the drum still has an OOB load despite the distribute cycle, then it will not be rotating at the fixed distribute speed (PT=37) but will have a cyclically changing speed. If this speed changes by more than 5%, for example by 10%, from the required distribute speed, then this is indicative of a possibly dangerous OOB condition. This condition will cause the PM count in PM up-counter 15 (also Figure 1) to increase to, say, PM=41. This value 41 is preset in an OOB correlator 68 which is in the enabled state due to the enabling input from gate 56 and due to the fact that an MS (motor stopped) signal on the reset input is at "0" due to the fact that the motor is still running. This output signal signifies an OOB test fail condition and is used to set a set-reset flip-flop 69 to give a "1" at its Q output—this output forming a machine reset signal MR.

It is to be noted that this test, as will be explained below, has a limited time period and it is assumed that the OOB has been detected within this time period.

The reset signal MR resets the firing angle counter 29 (also see Figure 1), enables an AND-gate 71, inhibits an AND-gate 75, and via the fail decoder gate 38 inhibits AND-gate 36 at its inverting input 37 so that no firing pulses can be forwarded to switch 6. The motor is therefore stopped. The MR signal appearing at an input of ROM 21 forces the Wash command W to be fed to ROM 22. Thus the command signals SS and D are removed and the circuits which control the distribute ramp and the OOB test cycle are inhibited.

The motor has been stopped to allow the clothes to fall in the stationary drum so that they can rearrange themselves during a following distribute cycle. The tachogenerator 2 has a zero output voltage and this causes an MS (motor stopped) signal to be given in a manner to be described with reference to Figure 3. This MS signal *inter alia* resets the OOB fail correlator 68 and inhibits gate 58 with the result that a "0" appears at the outputs of gate 61 and flip-flop 62 are "0" and, therefore, the reset input to counter 63 is removed. Thus the latter recommences its count cycle. When it reaches 200, for example, which gives a waiting time of 2 seconds during which the motor remains stopped to allow the clothes to fall, correlator 66

10

responds to this count value preset therein. Its "1" output enables gate 71 and, via an OR-gate 72, a delay flip-flop 73, the OR-gate 61 and flip-flop 62, routes the "1" to the reset input of counter 63 and holds the counter reset at zero count. The "1" output of correlator 66 also resets flip-flop 69 and, hence, removes the MR signal. With the MR signal removed, the firing pulses are again fed to the switch 6 and the motor is restarted. This, in turn, removes the signal MS and the control loop now operates to bring the motor up to the wash speed and then to the distribute speed, after which the OOB test is repeated.

It will now be assumed that the clothes have been evenly distributed in such a manner that the OOB test does not fail. At the end of the distribute ramp, correlator 55 is enabled and, as a result, a "test time complete" correlator 67 is prepared and counter 63 starts counting. This time the OOB test is passed and therefore the counter continues to count until it reaches 200 (i.e. 2 seconds at 50 Hz), whereupon correlator 67 is enabled and gives a "spin enable" output signal SE to enable the spin cycle to commence. This SE signal appearing at a control input to ROM 22 now allows the latter to provide the spin PT value at its output, this value then being loaded directly into down counter 23 via down counter 54 which now acts merely as a buffer and has no effect on the operation.

Thus, having checked that there is no dangerous OOB, the system now proceeds with the spin cycle in the manner previously described with reference to Figure 1.

If, for any reason, the motor fails to start or stalls (e.g. due to excessive overload), the MS signal is generated. The $\overline{MS}=0$ signal input disables gate 58 and, as a result via OR-gate 61, counter 63 is enabled to start counting. When it reaches its maximum count (9 bits at 50 Hz gives 2.55 seconds), stall-time correlator 65 is enabled. Since $\overline{MR}=1$, AND-gate 75 goes to "1", and the $\overline{Q}$ output of flip-flop 73 goes to "1" at the next clock pulse. Since both MS and $\overline{MR}=1$, and AND-gate 74 is enabled and this, in turn, causes the fail decoder 38 to stop the feed of firing pulses to switch 6. Thus the power feed to the motor is stopped a little over $2\frac{1}{2}$ seconds after the motor stops for any reason, thus providing a very important safety feature under fault conditions. Further gates, not shown, are arranged such that the system can only be reset to normal by switching off the mains supply to the washing machine.

When the motor is initially switched on, the firing angle is such that substantially no power is fed to the motor in the first half cycle. The control loop decrements the firing angle count at the rate of about 2 counts (0.9° of conduction) in each half cycle (10 ms) period and the conduction angle slowly increases until the system measures the desired acceleration rate towards the target speed.

It has been found that this gives a somewhat long time delay and noise from the motor in the period before it builds up sufficient torque to start. A faster start up system has therefore been provided in which the conduction angle is increased at a faster rate than normal control just for the few cycles of the mains frequency whilst the motor is building up the starting torque.

The start up sequence consists of decreasing the firing angle by X° in each half cycle for N cycles and then activating the normal loop control in order to allow the acceleration term to dampen the response. Typically, X=9° or 18° and N=4.

The operation of the circuit is as follows. When the mains ON switch is operated, a d.c. power supply is provided for the logic circuits and the motor stopped signal MS is provided until the motor has started and the tachogenerator has reached a given minimum output voltage.

The $\overline{MS}=0$ input to gate 58 causes a "0" to be applied to the reset input of counter 63 which, therefore, starts counting the zero crossings MZX. When the start up cycle is commenced, a start up enable signal ST is fed to the enable input of correlator 64 which accordingly provides a start up period output STUP1. When the counter 63 has counted a predetermined number (for example 8) of the MZX crossings, correlator 64 detects this count value and resets. Thus the correlator 64 provides a signal STUP1 which lasts for the start up period, of say 4 mains cycles, determined by correlator 64.

Firing angle counter 29 is initially reset to its maximum permissible firing angle and counts down by a number which is defined by the length of the pulse CEN3 as previously described.

Up counter 32 counts upwards from zero at each mains crossing. A count value decoder 81 sets when the count value is zero and resets when the count value reaches 10 counts of the 40 kHz clock input CP2. During this period, an AND-gate 82 is enabled due to the "1" signal on each of its inputs (MS=1) during the start up period. Thus an output signal STUP2 is provided to latch 83 for the period of the ten 40 kHz pulses. The output STUP3 of latch 83 overrides the LAP and LEP control inputs to decoder 28 (see Figure 1) and causes the latter to provide a CEN3 signal for the period of the ten 40 kHz pulses. During this CEN3 period the firing angle counter 29 therefore counts twenty pulses at the 80 kHz rate as described above and the firing angle counter is therefore decremented by 20 (9° angle).

Since the control of the firing angle counter is taken over by latch 83, signal STUP3 is also used to disable the all-zero's detector 31 and error counter 25 via a respective inhibit input (not shown) on each.

Thus at each mains zero crossing, the firing angle is decremented by 20 counts for the total number of mains frequency cycles determined by correlator 64. At the end of this period, correlator 64 removes the STUP1 signal and the firing angle control loop reverts to normal operation. The number of mains cycles occupied by the start up period is chosen so that the motor is just starting at the end of the period and the MS signal therefore reverts to "0".

The operation of the tachogenerator circuit will now be described with reference to Figures 3 and 4.

The tachogenerator 9 is connected to the control system via terminals 11 and 11a. Terminal 11 is connected via a resistor R1 (one megohm) to a 12V d.c. supply rail which supplies the logic system and via a resistor R2 (47 kilohm) to the voltage input of a voltage level comparator 85 which provides an output A when the input voltage exceeds 8 volts, an output B when the input voltage is less than 0.5 volts and an output C when the input voltage is more negative than +50 mV. Terminal 11a is connected to the zero volt supply rail together with the comparator 85.

Output A is connected to the "enable" input of a supply mains zero crossings counter 86 supplied with mains zero crossing pulses MZX. Counter 86 is a 2-bit counter and gives an output TOC (tachogenerator open circuit) if two MZX pulses are received whilst it is enabled. The particular tachogenerator 9 used in this embodiment is of the type which only delivers more than 7.5 volts peak if its output frequency is above 200 Hz—that is to say a spin speed of a washing machine (see Table I). Thus the 7.5 volt level can only be exceeded for a few milliseconds at a time and therefore the 8 volt level cannot be maintained for the whole ten millisecond period between two consecutive MZX pulses. Since the impedance of tachogenerator 9 is negligible compared with the resistance of resistor R1, there is substantially no d.c. voltage across the tachogenerator in normal operation and the d.c. provision has no effect. If the tachogenerator develops an open circuit fault condition, however, the voltage at terminal 11 rises to the full 12 volt rail and comparator 85 provides a permanent A output because the voltage exceeds the 8 volt comparator level. Some time between half and a full mains cycle later—that is to say two consecutive MZX pulses—the TOC output is given by counter 86. This output is fed to the TOC input of a fault decoder 38 (see Figure 2) and the power to the motor 2 is cut off in the manner described above.

If the tachogenerator is open circuit, then no PL pulses are given and this would lead to the switching off of the washing machine a few seconds later. However the lack of PL pulses would mean that the motor is apparently demanding full power since no apparent motor stall situation yet exists. The rapid provision of the TOC signal overcomes this problem and prevents any possible damage to the motor.

A similar case exists for a stopped or stalled motor—namely the tachogenerator output ceases. This cessation of signal is recognised by comparator 85 which gives output signal B because the peak voltage at terminal 11 is less than 0.5 volts. The reason for the choice of 0.5 volts will be explained later. Output B is connected to the "enable" input of a second mains zero crossings counter 87 fed with MZX pulses at its count input. Thus in the case of a stopped or stalled motor, the B output causes counter 87 to count to its maximum count of four consecutive MZX pulses and to provide a motor stopped signal MS between 30 and 40 milliseconds after the tachogenerator output voltage drops below 0.5 volts.

A principal feature of the remaining part of the circuit shown in Figure 3 which provides a single output pulse for each complete cycle of the tachogenerator output waveform is that it gives very considerably increased noise immunity compared with previously known zero crossing pulse generators and also only uses two comparators for this purpose.

The tachogenerator used in the embodiment had a minimum peak output voltage of 0.75 volts at the lowest speed at which it is used (Wash 1—see Table I). Because of high motor currents at low speeds—especially in the case of motors having a tapped field—a certain amount of stray field is picked up by the coil of the tachogenerator and this distorts the output waveform of the tachogenerator in the form of frequency modulation noise. Motor commutation noise also appears as spikes in the tachogenerator output waveform and this is greatest at the higher speeds. This total noise results in the need to choose a detection voltage lower than the minimum tachogenerator voltage under operating conditions and a value of two thirds of the minimum voltage of 0.75 volts was chosen—namely 0.5 volts as stated above.

Comparator 85 also provides the "less than zero" output C.

In order to provide a clearly-defined d.c. reference voltage to comparator 85 which indicates that the voltage of the tachogenerator is passing through zero, the value of +50 mV was chosen. This voltage is regarded as being substantially zero for present purposes and the actual value chosen is not particularly critical. This considerably simplifies the comparator since a reference voltage of precisely zero volts gives rise to detection difficulties since the sign changes with a minute change of voltage in either direction. Thus output C is given only so long as the tachogenerator output voltage is more negative than +50 mV and therefore extends over the whole of the negative half cycle of the tachogenerator output voltage.

Output B is fed to one input of an AND-gate 88 and output C is fed to one input of an OR-gate 89 the other input of which is connected to the output of gate 88. The output of gate 89 is connected to the D-input of a clocked delay-type flip-flop 91 clocked by the 40 kHz system clock CP2. The Q output of flip-flop 91 is connected to the D-input of a second D-type flip-flop 92 and also to the other input of AND-gate 88 to form a latching circuit for flip-flop 91. The Q̄ output of flip-flop 91 and the Q output of flip-flop 92 are connected to respective inputs of a NAND-gate 93. The output of NAND-gate 93 is connected to the D-input of a further D-type flip-flop 94 the output of which forms the circuit output. Items 85 and 88 to 94 constitute the tachogenerator signal detector 13 shown in Figure 1.

The operation of the circuit will now be described with reference to Figure 4 which shows waveforms at various parts of the circuit of Figure 3. It is to be noted that the change of state of the D-type flip-flops is effected by clock pulses, but since the frequency of the latter is high (80 kHz) compared with that of the tachogenerator, these clock pulses are shown with a considerably lower frequency in order to make the sequencing operation clear.

In Figure 4, waveform OP shows the output voltage waveform of the tachogenerator 9 and the 0.5 volt and 50 millivolt comparator levels are also shown. The remaining waveforms are given the same designations as the relevant components of Figure 3. Output C is a logic 1 for the whole of the negative-going half cycles of the waveform OP due to the comparator level of +50 mV. C=1 via OR-gate 89 causes flip-flop 91 to set its Q=1 at the first clock pulse and the next clock pulse sets flip-flop 92 to Q=1. Since 91 $\overline{Q}$=0, flip-flop 94 Q is therefore set to 1. Signal C then goes to 0 for the whole of the positive-going half cycle and B goes to 0 for the portion of the waveform OP which exceeds +0.5 V. Thus the Q output of flip-flop 91 (waveform 91 Q) goes to 0 at the next clock pulse. Flip-flop 92 Q therefore goes to 0 at the next subsequent clock pulse, at which clock pulse flip-flop 94 Q also goes to 0 in response to gate 93 going to 0 on the lost previous clock pulse. The next clock pulse resets flip-flop 94 Q to 0 in response to the 0 on flip-flop 92 Q via gate 93. Thus the one clock pulse delay between the resetting of flip-flops 91 and 92 to zero causes flip-flop 94 to reset to zero only for one clock pulse period and hence give a single pulse output having a width of 12.5 microseconds.

When the waveform OP drops below the 0.5 volt level signal B sets to 1. Gate 88 is inhibited due to 91 Q=0 and so signal B has no effect. When the voltage drops below +50 mV, C goes to 1 and, via gate 89, sets 91 Q to 1 at the next clock pulse. Flip-flop 92 Q goes to 1 one clock pulse later. Flip-flop 94 is not affected until the next positive half cycle of the tachogenerator output voltage. Thus flip-flop 94 can only be reset to 0 for the one clock cycle during the positive half cycle of the a.c. voltage, as detected by the two level comparator signals B and C, and cannot be reset during the negative half cycle unless a strong noise pulse arrives.

It is to be noted that the feedback connection from the Q output of flip-flop 91 to the gate 88 serves as a latch for the state of the flip-flop. Thus when the Q output of flip-flop 91 goes to 1 at the start of the negative half cycle, it is held latched at 1 up to the beginning of the next positive half cycle until the PO voltage reaches the 0.5 V level. Thus the instant at which C goes to 0 has no significance so long as B=1 and may therefore be affected by noise and delayed up to the instant at which B goes to 0 without any adverse effect whatever. The instant at which B goes to 0 can be affected by noise, of course, but the absence of any noise effect on one of the two correlators nevertheless gives substantially greater noise immunity on the rising portion of the positive half cycle of voltage PO since any noise on the input waveform below 0.5 volt will not cause flip-flop 91 to reset to Q=0.

In the particular embodiment described above, the voltage comparison level of 0.5 volt has been chosen in conjunction with the voltage output of a particular tachogenerator used at a particular minimum speed. Clearly, the comparison voltage level can be selected to give optimum noise immunity in any particular case. Whilst this level is preferably of the order of two thirds of the peak voltage level of the tachogenerator when the tachogenerator is operating at its minimum useful speed reasonable noise immunity is given provided the reference level is at least half the peak voltage at minimum speed. The level of 8 volts and the maximum count of counter 86 are chosen in dependence upon the highest frequency and voltage of the particular tachogenerator used and may of course be altered to suit any other tachometer having different output characteristics.

Whilst the positive half cycles have been used in the embodiment for the level detection, the negative half cycles could alternatively be used. Also, of course, the opposite logic states could be used with appropriate circuit changes well known to those skilled in the art.

## Claims

1. A drum speed control system for a washing and/or spin drying machine of the type having a laundry drum which is rotatable by an electric motor which is driven from an a.c. mains voltage supply and which is provided with a tachogenerator having an a.c. output signal which is proportional to the speed of the motor and, hence, of the drum; the system being arranged for connection to said motor and tachogenerator to form a control loop, which system has an input circuit for the tachogenerator signal and an output motor-drive circuit arranged to control the energy supplied to the motor from the supply, whereby the motor speed may be automatically brought to, and/or maintained substantially constant at, any predetermined target speed; characterised in that the system is a digital system and the control loop includes means for controlling said energy in dependence upon a derived function of the rate and sign of any change in the speed of the motor and also in dependence upon a derived function of any difference between the actual motor speed and the required target speed, said rate of change in speed and the actual speed being derived from the tachogenerator output signals.

2. A drum speed control system as claimed in Claim 1 wherein the motor-drive circuit includes a semiconductor controlled switch arranged to be connected in series with the motor, and wherein the said means controls the energy supplied to the motor by varying the phase angle of the mains supply voltage at which the switch is fired into its conductive state by a firing pulse generated in dependence upon the said functions.

3. A drum speed control system as claimed in Claim 2, wherein the said means varies the firing angle C of the switch in a half cycle of the mains supply waveform in accordance with the control loop expression

$$C=C'+F1(PM'-PM)+F2(PT-PM)$$

where:

C' is the immediately previous firing angle,

PM is a function of the period of the latest cycle of the tachogenerator output signal,

PM' is a corresponding function of the period of a preceding cycle of the said output signal,

PT is a corresponding function of the period of the tachogenerator output signal which corresponds to the predetermined speed, and

F1 and F2 are scaling factors which at least partly determine the rate of change of motor speed; and wherein the values of (PM'−PM) and (PT−PM) are truncated to a respective given value if they exceed said values.

4. A drum speed control system as claimed in Claim 3, including a counter arranged to count at a constant rate, determined by clock pulses fed at a constant rate thereto from a clock pulse generator, for at least a major part of the period of a cycle of the tachogenerator output signal frequency, the final count value in each half cycle being the value PM' or PM as the case may be.

5. A method of controlling the speed of the drum of a washing and/or spin drying machine of the type in which the drum is rotatable by an electric motor which is driven from an a.c. mains supply and which is provided with a tachogenerator having an a.c. output signal which is directly proportional to the speed of the motor and, hence, of the drum, characterised in that the method comprises the steps of

(a) deriving from the tachogenerator output signal a first quantity (acceleration term) which is a function of the current rate of change of speed of the motor,

(b) deriving from the tachogenerator output signal a second quantity (error term) which is a function of the difference between the current motor speed and the required motor speed,

(c) combining the first and second quantities, having regard to their sign, to produce a third quantity, and

(d) controlling the driving power to the motor in dependence upon the magnitude of the third quantity; whereby the speed of the motor may be changed to a predetermined target speed at a controlled rate and then maintained at the target speed.

6. A method as claimed in Claim 5 wherein each said acceleration term is obtained by measuring the duration of at least a major part of each of two consecutive periods of the tachogenerator output signal frequency and deriving a function of the difference between them.

7. A method as claimed in Claim 6 wherein the acceleration term is derived as a function of said difference by truncating said difference to a selected one of a set of predetermined values if the difference is greater than the selected value, and then multiplying the said predetermined value by a selected factor, both selections being made in dependence upon the particular acceleration effect required.

8. A method as claimed in Claim 5, 6, or 7, wherein each said error term is obtained by measuring the duration of at least a major part of a period of the tachogenerator output signal frequency and deriving a function of the difference between the duration so obtained and the duration of a period of the tachogenerator output signal frequency that corresponds to the required target speed.

9. A method as claimed in Claim 8 wherein said error term is derived as a function of said difference by truncating the said difference to a selected one of a set of predetermined values if the difference is greater than said selected value, in dependence upon the required target speed.

**Patentansprüche**

1. Anordnung zur Steuerung der Trommeldrehzahl einer Wasch- und/oder Trockenschleudermaschine vom Typ mit einer von einem Elektromotor gedrehten Wäschetrommel, wobei der Motor mit einer Netz-Wechselspannung gespeist und mit einem Tachogenerator versehen ist, dessen Wechselspannungs-Ausgangssignal der Motordrehzahl und daher der Trommeldrehzahl proportional ist, wobei die Steueranordnung an den Motor und an den Tachogenerator zur Bildung einer Regelschleife angeschlossen ist und über eine Eingangsschaltung für das Tachogeneratorsignal und eine Ausgangs- Motorsteuerschaltung zur Steuerung der Energieversorgung zum Motor aus der Quelle verfügt, wobei die Motordrehzahl selbsttätig auf eine vorgegebene Drehzahl gebracht und/oder darauf im wesentlichen konstant gehalten werden kann, dadurch gekennzeichnet, dass die Steueranordnung eine digitale Einrichtung ist und die Regelschleife ein Mittel zur Steuerung der Energie in Abhängigkeit von einer Ableitfunktion der Grösse und des Vorzeichens einer Änderung in der Motordrehzahl und ebenso in Abhängigkeit von einer Ableitfunktion eines Unterschieds zwischen der momentanen Motordrehzahl und der gewünschten Drehzahl enthält, wobei die Grösse der Drehzahländerung und die momentane Drehzahl aus den Ausgangssignalen des Tachogenerators abgeleitet werden.

2. Anordnung zur Steuerung der Trommeldrehzahl nach Anspruch 1, dadurch gekennzeichnet, dass die Motorsteuerschaltung einen halbleitergesteuerten Schalter in Serie mit dem Motor enthält, und dass das Mittel die Energieversorgung des Motors durch ständiges Wechseln des Phasenwinkels der Netzspannung steuert, bei der der Schalter mittels eines abhängig von den genannten Funktionen erzeugten Zündimpulses in den leitenden Zustand gebracht wird.

3. Anordnung zur Steuerung der Trommeldrehzahl nach Anspruch 2, dadurch gekennzeichnet, dass das Mittel den Zündwinkel C des Schalters in einem Halbzyklus der Netzspannungswelle entsprechend nachstehendem Steuerschleifenausdruck wechselt

$$C=C'+F1(PM'−PM)+F2(PT−PM),$$

14

worin

C′ der direkt vorangehende Zündwinkel,

PM eine Funktion der Periode des letzten Zyklus des Ausgangssignals des Tachogenerators,

PM′ eine entsprechende Funktion der Periode eines vorangehenden Zyklus dieses Ausgangssignals,

PT eine entsprechende Funktion der Periode des Ausgangssignals des Tachogenerators ist, das der vorgegebenen Drehzahl entspricht, und

F1 und F2 Zahlenbereichsfaktoren sind, die zumindest teilweise die Grösse der Motordrehzahländerung bestimmen.

und worin die Werte von (PM′−PM) und (PT−PM) auf einen jeweiligen gegebenen Wert angebrochen werden, wenn sie die genannten Werte überschreiten.

4. Anordnung zur Steuerung der Trommeldrehzahl nach Anspruch 3, dadurch gekennzeichnet, dass ein Zähler zum Zählen bei einer konstanten Geschwindigkeit vorgesehen ist, die durch mit einer bestimmten Geschwindigkeit zugeführte Taktimpulse aus einem Taktimpulsgenerator bestimmt wird, wobei der Zählvorgang zumindest während des grösseren Teils der Periode eines Zyklus mit der Frequenz des Ausgangssignals des Tachogenerators erfolgt, wobei der endgültige Zählwert in jedem Halbzyklus den Wert PM′ bzw. den Wert PM hat.

5. Verfahren zum Steuern der Trommeldrehzahl einer Wasch- und/oder Trockenschleudermaschine, deren Trommel von einem Elektromotor drehbar ist, der aus einer Wechselspannungsquelle gespeist und mit einem Tachogenerator versehen ist, dessen Wechselspannungs-Ausgangssignal der Drehzahl des Motors und daher der Drehzahl der Trommel direkt proportional ist, dadurch gekennzeichnet, dass dieses Verfahren aus folgenden Schritten besteht:

a) Ableitung einer ersten Grösse Beschleunigungsterm aus dem Ausgangssignal des Tachogenerators, die eine Funktion der laufenden Änderungsgeschwindigkeit der Motordrehzahl ist,

b) Ableitung einer zweiten Grösse (Fehlerterm) aus dem Ausgangssignal des Tachogenerators, die eine Funktion des Unterschieds zwischen der laufenden Motordrehzahl und der erforderlichen Motordrehzahl ist,

c) Kombination der ersten und zweiten Grössen, die mit Rücksicht auf ihre Vorzeichen eine dritte Grösse ergeben müssen, und

d) Steuerung der Antriebsleistung zum Motor abhängig vom Wert der dritten Grösse,

wobei die Motordrehzahl nach einer vorgegebenen gewünschten Drehzahl bei einer gesteuerten Geschwindigkeit geändert und darauf auf der gewünschten Drehzahl gehalten werden kann.

6. Verfahren nach Anspruch 5, dadurch gekennzeichnet, dass jeder dieser Beschleunigungsterme durch Messen der Dauer zumindest eines grösseren Teils einer jeden von zwei aufeinanderfolgenden Perioden der Frequenz des Ausgangssignals des Tachogenerators und durch Ableiten einer Funktion des Unterschieds zwischen ihnen erhalten wird.

7. Verfahren nach Anspruch 6, dadurch gekennzeichnet, dass der Beschleunigungsterm als Funktion des genannten Unterschieds dadurch abgeleitet wird, dass dieser Unterschied auf einen ausgewählten Wert eines Satzes vorgegebener Werte abgerundet wird, wenn der Unterschied grösser ist als der ausgewählte Wert, und anschliessend dieser vorgegebene Wert um einen ausgewählten Faktor vervielfacht wird, wobei beide Wählvorgänge abhängig von der gewünschten besonderen Beschleunigungswirkung erfolgen.

8. Verfahren nach Anspruch 5, 6 oder 7, dadurch gekennzeichnet, dass jeder dieser Fehlerterme durch Messen der Dauer zumindest eines grösseren Teils einer Periode der Frequenz des Ausgangssignals des Tachogenerators und durch Ableiten einer Funktion des Unterschieds zwischen der so erhaltenen Dauer und der Dauer einer Periode der Frequenz des Ausgangssignals des Tachogenerators erhalten wird, wobei diese Frequenz der gewünschten Drehzahl entspricht.

9. Verfahren nach Anspruch 8, dadurch gekennzeichnet, dass dieser Fehlerterm als Funktion dieses Unterschieds dadurch angeleitet wird, dass dieser Unterschied auf einen ausgewählten Wert eines Satzes vorgegebener Werte abgerundet wird, wenn der Unterschied grösser als dieser ausgewählte Wert ist, in Abhängigkeit von der gewünschten Drehzahl.

**Revendications**

1. Système de régulation de vitesse de tambour pour une machine à laver et/ou à essorer centrifuge du type comportant un tambour de lavage qui peut être entraîné en rotation par un moteur électrique alimenté au moyen de la tension alternative du secteur et pourvu d'une génératrice tachymétrique comportant un signal de sortie en courant alternatif qui est proportionnel à la vitesse du moteur et, par conséquent, du tambour, le système étant agencé en vue d'être connecté au moteur et à la génératrice tachymétrique pour former une boucle de régulation, ce système comportant un circuit d'entrée pour le signal de la génératrice tachymétrique et un circuit de sortie pour la commande du moteur propre à régir l'énergie fournie au moteur par l'alimentation, la vitesse du moteur pouvant être ainsi amenée automatiquement à une valeur recherchée prédéterminée quelconque et/ou être maintenue pratiquement constante à cette valeur, caractérisé en ce que le système est un système numérique et la boucle de régulation comprend un dispositif pour régir l'énergie sur base d'une fonction dérivée du taux et du signe d'une variation quelconque de la vitesse du moteur et d'une fonction dérivée d'une différence quelconque entre la vitesse

**0 071 307**

réelle du moteur et la vitesse recherchée requise, le taux de variation de la vitesse et la vitesse réelle étant dérivés des signaux de sortie de la génératrice tachymétrique.

2. Système de régulation de vitesse de tambour suivant la revendication 1, dans lequel le circuit de commande du moteur comprend un interrupteur commandé à semi-conducteur propre à être connecté en série avec le moteur et le dit dispositif régit l'énergie fournie au moteur en modifiant l'angle de phase de la tension d'alimentation du secteur auquel l'interrupteur est déclenché dans son état conducteur par une impulsion de déclenchement produite sur base des dites fonctions.

3. Système de régulation de vitesse de tambour suivant la revendication 2, dans lequel le dit dispositif modifie l'angle de déclenchement C de l'interrupteur dans un demi-cycle de la forme d'onde d'alimentation de secteur en fonction de l'expression de la boucle de régulation suivante

$$C=C'+F1(PM'-PM)+F2(PT-PM)$$

où
C' est l'angle de déclenchement immédiatement précédent
PM est une fonction de la période du dernier cycle du signal de sortie de la génératrice tachymétrique,
PM' est une fonction correspondante de la période d'un cycle précédent du signal de sortie,
PT est une fonction correspondante de la période du signal de sortie de la génératrice tachymétrique qui correspond à la vitesse prédéterminée, et
F1 et F2 sont des facteurs d'échelle qui déterminent au moins partiellement le taux de variation de la vitesse du moteur,
et où les valeurs de (PM'−PM) et de (PT−PM) sont tronquées jusqu'à une valeur respective donnée si elles excèdent les dites valeurs.

4. Système de régulation de vitesse de tambour suivant la revendication 3, comprenant un compteur propre à compter à une allure constante déterminée par des impulsions d'horloge fournies à une allure constante par un générateur d'impulsions d'horloge, pendant au moins une majeure partie de la durée d'un cycle de la fréquence du signal de sortie de la génératrice tachymétrique, la valeur de comptage finale dans chaque demi-cycle étant la valeur PM' ou PM suivant le cas.

5. Procédé pour régler la vitesse du tambour d'une machine à laver et/ou à essorer centrifuge du type dans lequel le tambour peut être entraîné en rotation par un moteur électrique qui est entraîné à partir d'une alimentation du secteur alternatif et qui est pourvu d'une génératrice tachymétrique comportant un signal de sortie en courant alternatif qui est directement proportionnel à la vitesse du moteur et, par conséquent, du tambour, caractérisé en ce que
(a) on dérive à partir du signal de sortie de la génératrice tachymétrique une première quantité (terme d'accélération) qui est fonction du taux de variation du moment de la vitesse du moteur,
(b) on dérive à partir du signal de sortie de la génératrice tachymétrique une seconde quantité (terme d'erreur) qui est fonction de la différence entre la vitesse du moment du moteur et la vitesse requise du moteur,
(c) on combine la première et la deuxième quantité, en tenant compte de leur signe, pour produire une troisième quantité, et
(d) on règle l'énergie fournie au moteur en fonction de la valeur de la troisième quantité, la vitesse du moteur pouvant ainsi être modifiée en direction d'une vitesse recherchée prédéterminée à une allure réglée et pouvant ensuite être maintenue à la valeur recherchée.

6. Procédé suivant la revendication 5, dans lequel on obtient chaque terme d'accélération en mesurant la durée d'au moins une majeure partie de chacune de deux périodes successives de la fréquence du signal de sortie de la génératrice tachymétrique et on dérive une fonction de la différence entre elles.

7. Procédé suivant la revendication 6, dans lequel on dérive le terme d'accélération en fonction de la différence en tronquant la différence jusqu'à une valeur sélectionnée d'un jeu de valeurs prédéterminées si la différence est supérieure à la valeur sélectionnée, puis on multiplie la valeur prédéterminée par un facteur choisi, les deux sélections étant effectuées en fonction de l'effet d'accélération particulier requis.

8. Procédé suivant la revendication 5, 6 ou 7, dans lequel on obtient chaque terme d'erreur en mesurant la durée d'au moins une partie majeure d'une période de la fréquence du signal de sortie de la génératrice tachymétrique et en dérivant une fonction de la différence entre la durée ainsi obtenue et la durée d'une période de la fréquence du signal de sortie de la génératrice tachymétrique qui correspond à la vitesse recherchée requise.

9. Procédé suivant la revendication 8, dans lequel on dérive le terme d'erreur en fonction de la différence en tronquant la dite différence jusqu'à une valeur sélectionnée d'un jeu de valeurs prédéterminées si la différence est supérieure à la valeur sélectionnée, en fonction de la vitesse recherchée requise.

16

Fig.1.

0 071 307

Fig.2.

2

## Fig.3.

## Fig.4.